# EUROPEAN PATENT APPLICATION

(11) **EP 0 878 952 A1**
(43) Date of publication of application: **18.11.1998**
(21) Application number: 97107752.4
(22) Date of filing: 13.05.1997
(51) Int. Cl.: H04N 1/00, G03G 15/00

(54) **Image processing system**

(71) Applicant: Primax Electronics Ltd, Hsi Chih Town, Taipei Hsien (TW)
(72) Inventor: Wieringa, Fred, c/o Primax Electronics Ltd., Hsi Chih Town, Taipei Hsien (TW)
(74) Representative: Bauer, Robert, Dipl.-Ing.

(57) **Abstract**

An image processing system (10) for scanning documents is devised for automatically processing the image file upon a specific event, such as to get rid of moiré patterns contained in an image file when scanning a magazine (18). The image processing system (10) comprises a scanner (16) for scanning a document (18) to generate an image file and an image processing software (42) having a moiré processing module (44) for getting rid of moiré patterns contained in the image file. The scanner (16) comprises a transparent platform (24) for placing a document (18) to be scanned, a lid (26) for covering the document (18) to be scanned, a scanning circuit (48) for scanning the document (18) to generate an image file, a lid sensor (30) for sensing the lid (26) and generating a lid signal, and a control circuit (50) connected to the scanning circuit (48) and the lid sensor (30) for transmitting the image file and the lid signal to the image processing software (42). Upon receiving the image file and the lid signal, if the lid signal indicates that the lid (26) is not in a closed position, the image processing software (42) will initiate the moiré processing module (44) to get rid of moiré patterns contained in the image file.

## Description

The present invention relates to an image processing system and, more particularly, to an image processing system for automatically processing the image file upon a specific event

Flatbed scanners are commonly used for scanning documents, photographs, magazines, etc., in an office environment. When scanning a document, an image file is generated and transmitted from a flatbed scanner to a computer for further processing. If any part of the image file is to be modified, a user has to initiate an image processing software in the computer to process the image file according to his needs.

In scanning photographs from a magazine, most magazine photographs contain fabric-like moiré patterns which can barely be seen by human eyes. But when scanned into a computer by a scanner with high resolution capability such as 300 or 600 DPI (dot-per-inch), such moiré patterns are magnified and details of each moiré pattern are clearly presented in the image file. Although image processing softwares for getting rid of the moiré patterns are already available in the market such as the "Leadtools" software from Lead Technologies, Inc., located in Charlotte, North Carolina, a user still has to specifically initiate such software from a computer to process the image file, of a magazine photograph and such process is quite inconvenient.

With these problems in mind the present invention aims at providing an image processing system as defined in claim 1 to provide an automatic process as, for example, to get rid of moiré patterns contained in an image file of a magazine photograph.

This is achieved by the present invention as claimed in that upon receiving an image file and a lid signal, if the received lid signal indicates that the lid is not in a closed position, the image processing software of the image processing system will initiate the respective software module such as a module to get rid of moiré patterns contained in the image file.

Further improvements in this respect are obtained by the features specified in the dependent claims.

The invention is illustrated by way of example with reference to the accompanying drawings, in which
Fig.1 is a perspective view of an image processing system according to the present invention, and
Fig.2 is a block diagram of the image processing system shown in Fig.1.

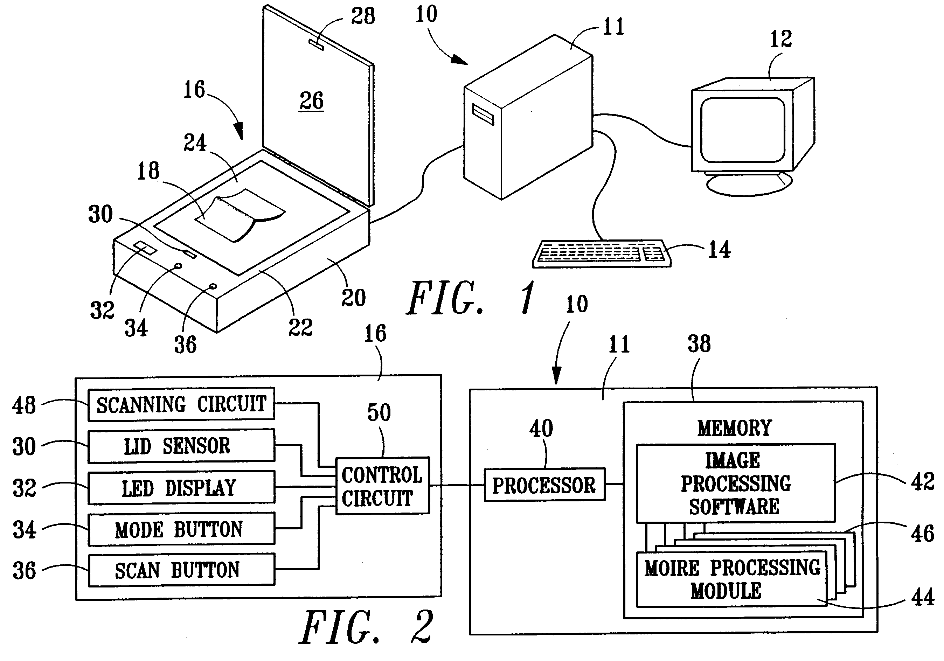

Please refer to Fig.1. Fig.1 is a perspective view of an image processing system 10 according to the present invention. The image processing system 10 comprises a computer 11 having a monitor 12 and a keyboard 14 connected to it, and a scanner 16 for scanning a magazine 18. The scanner 16 comprises a housing 20 having an upper end 22, a transparent platform 24 installed on the upper end 22 of the housing 20 for placing a document such as the magazine 18 to be scanned, and a lid 26 pivotally installed above the platform 24 for covering the document to be scanned when the lid 26 is in a closed position. The scanner 16 further comprises a magnet sensor 30 installed on the upper end 22 of the housing 20 for sensing the magnet 28 installed on the lid 26 when the lid is in a closed position, an LED display 32 for displaying the scanning mode such as text, photograph, negative, etc., of the scanner 16, a mode button 34 for changing the scanning mode displayed over the LED display 32, and a scan button 36 for initiating a scanning circuit 48 (see Fig. 2) to scan the document placed on the platform 24.

Fig.2 is a block diagram of the image processing system 10 shown in Fig.1. The computer 11 comprises a memory 38 for storing software such as the image processing software 42 and various data files and a processor 40 for executing the software stored in the memory 38. The image processing software 42 contains a plurality of image processing modules 46 such as a moiré processing module 44. Each image processing module 46 is used to process an image file generated by the scanner 16 to perform a specific image processing function. For example, the moiré processing module 44 is used to get rid of moiré patterns contained in an image file when initiated by the image processing software 42.

The scanner 16 connected to the computer 11 comprises a scanning circuit 48 which is installed in the housing 20 under the platform 24 for scanning the magazine 18 placed on the platform 24 to generate an image file, a lid sensor 30 for sensing the magnet 28 installed on the lid 26 and generating a lid signal for indicating the position of the lid 26, an LED display 32 for displaying the scanning mode of the scanner 16, a mode button 34 for changing the scanning mode displayed over the LED display 32, a scan button 36 for initiating the scanning circuit 48 to scan the magazine 18, and a control circuit 50 connected to the scanning circuit 48, the lid sensor 30, etc., for controlling the operations of the scanner 16 and transmitting the image file and the lid signal to the image processing software 42 of the computer 11.

When the image processing software 42 receives the image file and the lid signal from the scanner 16, if the lid signal indicates that the lid 26 is not in a closed position which means the document to be scanned may be a magazine or a book which is too thick to close the lid 26, the image processing software 42 will initiate the moiré processing module 44 to get rid of moiré patterns contained in the image file. Other image processing modules 46 can also be initiated in the same time or in the same manner to process the image file.

The control circuit 50 can also transmit the scanning mode information of the scanner 16 to the computer 11. In order to avoid performing the moiré processing function over image files generated from documents other than magazine photographs, the image processing software can also be instructed to initiate the moire processing module to get rid of the moire patterns contained in the image file only when the lid signal indicates that the lid 26 is not in the closed position and the scanner 16 is set in the photograph mode.

## Claims

1. An image processing system (10) comprising:
(1) a computer (11) having a memory (38) for storing an image processing software (42) and a processor (40) for executing software, the image processing software (42) comprising a software module (44, 46) for processing an image file to perform a specific image processing function; and
(2) a scanner (16) connected to the computer (11) comprising:
(a) a housing (20) having an upper end (22), a transparent platform (24) installed on the upper end (22) of the housing (20) for placing a document (18) to be scanned, and a lid (26) pivotally installed above the platform (24) for covering the document (18) to be scanned when the lid (26) is in a closed position;
(b) a scanning circuit (48) installed in the housing (20) for scanning the document (18) to generate an image file;
(c) a lid sensor (30) installed in the housing (20) for sensing the lid (26) and generating a lid signal for indicating a position of the lid (26); and
(d) a control circuit (50) connected to the scanning circuit (48) and the lid sensor (30) for transmitting the image file and the lid signal to the image processing software (42) of the computer (11);
wherein upon receiving the image file and the lid signal, if the lid signal indicates that the lid (26) is not in the closed position, the image processing software (42) will initiate the software module (44, 46) to process the image file.

2. The image processing system (10) of claim 1 wherein the software module (44, 46) is a moiré processing module (44) for getting rid of moiré patterns contained in the image file when initiated by the image processing software (42).

3. The image processing system (10) of claim 2 wherein the scanner (16) further comprises a mode button (34) connected to the control circuit (50) for setting the scanner (16) to a photograph mode and wherein the image processing software (42) will initiate the moire processing module (44) to get rid of the moiré patterns contained in the image file only when the lid signal indicates that the lid (26) is not in the closed position and the scanner (16) is set to the photograph mode.
